# EUROPÄISCHE PATENTSCHRIFT

(11) **EP 0 718 154 B1**
(45) Veröffentlichungstag und Bekanntmachung des Hinweises auf die Patenterteilung: **19.08.1998**
(21) Anmeldenummer: 95114777.6
(22) Anmeldetag: 20.09.1995
(51) Int. Cl.: B60R 7/12

(54) **Aufbewahrungsvorrichtung für Regenschirme zum Einbau in Kraftfahrzeugen**
Storage compartment for an umbrella to be fitted in a motor vehicle
Dispositif porte-parapluie apte à être fixé dans un véhicule

(30) Priorität: 23.12.1994 DE 4446158
(43) Veröffentlichungstag der Anmeldung: 26.06.1996
(73) Patentinhaber: fischerwerke Artur Fischer GmbH & Co. KG, D-72178 Waldachtal (DE)
(72) Erfinder: Ackeret, Peter, CH-8700 Küsnacht (CH)

(56) Entgegenhaltungen:
- DE-A- 2 517 285
- DE-U- 9 400 390
- DE-U- 9 410 991
- US-A- 1 955 436
- PATENT ABSTRACTS OF JAPAN vol. 95 no. 7,31.August 1995 & JP-A-07 096796 (SATO KOGYO) 11.April 1995,

## Beschreibung

Die Erfindung betrifft eine Aufbewahrungsvorrichtung für Regenschirme zum Einbau in Kraftfahrzeugen gemäß der Gattung des Anspruches 1.

Für die Unterbringung von Regenschirmen ist in Kraftfahrzeugen normalerweise kein bestimmter Platz vorgesehen. Wegen ihrer Größe werden Regenschirme meist auf dem Rücksitz oder der Hutablage abgelegt, was jedoch nur bei trockenen Regenschirmen zweckmäßig ist. Nasse Regenschirme werden normalerweise auf den Boden hinter dem Fahrer- bzw. Beifahrersitz oder vor den Beifahrersitz gelegt. Dies empfiehlt sich jedoch nur, wenn die Rücksitze bzw. der Beifahrersitz unbenützt sind. Nebst der Gefahr von Beschädigungen eines auf dem Boden liegenden Regenschirmes durch Fahrgäste, insbesondere beim Ein- und Aussteigen, wird der Teppichboden durch das Tropfwasser stark benäßt, was unerwünscht ist. Oft werden nasse Regenschirme daher im Kofferraum untergebracht, was jedoch dazu führt, daß der Benützer verregnet wird.

Aus der US-PS 1 955 436 ist eine gattungsgemäße Aufbewahrungsvorrichtung für Regenschirme zum Einbau in Kraftfahrzeugen bekannt, bei der die obengenannten Anforderungen zum Teil erfüllt sind. Die bekannte Vorrichtung weist ein köcherförmiges Aufnahmegehäuse für den Regenschirm auf, das über eine Halterung in einer senkrechten Position z.B. an der Rückseite eines Fahrzeugsitzes befestigbar ist. Am unteren Ende des Aufnahmegehäuses ist ein Kugelgelenk angeordnet, das über einen Befestigungsbolzen mit der Halterung fest verbunden ist. Ein weiterer Befestigungspunkt befindet sich im oberen Bereich des Aufnahmegehäuses. An diesem Befestigungspunkt kann das Aufnahmegehäuse ausgeklipst werden und ist dann über das Kugelgelenk nach allen Richtungen hin verschwenkbar. Durch diese instabile Schwenklagerung wird jedoch die Handhabung erschwert, da zur Vermeidung des unkontrollierten Abkippens das Aufnahmegehäuse während des Einschiebens bzw. Herausnehmens des Regenschirms in der verschwenkten Position gehalten werden muß. An dem Kugelgelenk ist eine Reibungsbremse vorgesehen, mit der der Reibungswiderstand etwas erhöht werden kann.

Die bekannte Aufbewahrungsvorrichtung ist nur in einer senkrechten Position und mit zwei im Abstand zueinander angeordneten Befestigungspunkten einbaubar. Damit ergeben sich erhebliche Beschränkungen für die Plazierung der Aufbewahrungsvorrichtung in einem Kraftfahrzeug.

Der Erfindung liegt die Aufgabe zugrunde, eine Aufbewahrungsvorrichtung für Regenschirme zum Einbau in Kraftfahrzeugen zu schaffen, die für den nachträglichen Einbau in unterschiedliche Kraftfahrzeuge universelle Befestigungsmöglichkeiten und Gebrauchslagen zur Anpassung an die verschiedenartigen Platzverhältnisse der Kraftfahrzeuge bietet, wobei eine einfache Handhabung und Zugriff auch für den Fahrer und Beifahrer ermöglicht sein soll.

Die gemäss der Erfindung zur Lösung dieser Aufgabe vorgesehenen Merkmale sind im Patentanspruch 1 genannt.

Die erfindungsgemässe Aufbewahrungsvorrichtung besteht aus einem köcherförmigen Aufnahmegehäuse, welches auf einer Stirnseite eine Oeffnung zum Einführen und Entnehmen des Regenschirmes und auf der anderen Stirnseite eine Bodenwand aufweist, sowie einer Halterung zum Anbringen der Aufbewahrungsvorrichtung im Kfz, wobei das Aufnahmegehäuse und die Halterung über ein quer zur Längsachse des Aufnahmegehäuses schwenkbares, im Bereich der Bodenwand angeordnetes Gelenk, miteinander verbunden sind.

Form und Grösse der Aufbewahrungsvorrichtung sind weitgehend durch den Regenschirm vorbestimmt. Die Plazierungs- und Befestigungsmöglichkeiten der länglichen, schmalen Aufbewahrungsvorrichtung im Kfz sind dadurch stark eingeschränkt.

Je nach Plazierung im Kfz ist zudem sehr oft der zum Einführen bzw. Entnehmen des Regenschirmes benötigte Freiraum vor der stirnseitigen Oeffnung der Aufbewahrungsvorrichtung nicht vorhanden, bzw. versperrt.

Durch die Möglichkeit, das Aufnahmegehäuse um das im Bereich der Bodenwand angeordnete Gelenk quer zu seiner Längsachse gegenüber der Halterung zu verschwenken, kann das Aufnahmegehäuse von einer Aufbewahrungsposition, die den gegebenen Einbauverhältnissen im Kfz bestmöglich Rechnung trägt, in eine Position geschwenkt werden, in welcher der erforderliche Freiraum zum bequemen Einführen und Entnehmen des Regenschirmes vorhanden ist.

Der mögliche Schwenkwinkel sollte dabei ca. 90° betragen und die jeweiligen Schwenkstellungen des Aufnahmegehäuses durch eine, vorzugsweise am Gelenk angeordnete, Reibungsbremse fixiert werden.

Nach der Erfindung ist das Gelenk so hinter der Bodenwand angeordnet ist, dass sich die Längsachse des Aufnahmegehäuses und die Schwenkachse des Gelenkes schneiden, und hinter dem Gelenk ist ein zylinderförmiger Befestigungsbolzen angeordnet der mit der Längsachse des abgeklappten Aufnahmegehäuses fluchtet und drehbar in einem, an der Halterung vorgesehenen Flansch aufgenommen wird, der mit einer Feststellvorrichtung versehen ist, mittels welcher der Befestigungsbolzen und damit das Aufnahmegehäuse in jeder Drehlage fixiert werden kann.

Da bei dieser Ausführungsform die Befestigungsebene der Halterung und die Schwenkrichtung des Aufnahmegehäuses relativ zueinander stufenlos verstellbar sind, kann die Schwenkrichtung des Aufnahmegehäuses unabhängig von der Einbaulage der Halterung im Kfz so gewählt werden, dass das Einführen und Entnehmen des Regenschirmes in einer optimalen Stellung des Aufnahmegehäuses erfolgen kann.

Zur problemlosen Montage und Reinigung der Aufbewahrungsvorrichtung sind Aufnahmegehäuse und Halterung vorzugsweise so ausgebildet, dass sie voneinander getrennt werden können.

Die Halterung weist vorzugsweise einen L-förmigen Querschnitt auf und umfasst einen Befestigungssockel, an welchem das Aufnahmegehäuse über das Gelenk hinter seiner Bodenwand, lösbar befestigt werden kann, sowie eine Grundplatte, welche sich in etwa parallel zur Längsachse des abgeklappten Aufnahmegehäuses gegen dessen offene Stirnseite hin erstreckt.

Die Grundplatte kann mittels Schrauben, Klebband oder auch mit entsprechenden Zwischenstücken im Kfz montiert werden.

Es bestünde auch die Möglichkeit, die Halterung so auszubilden, dass die Aufbewahrungsvorrichtung auf einfache Weise am Bodenteppich des Kfz befestigt werden könnte.

Dazu wäre eine, in etwa der Grösse der Grundplatte entsprechende, vorzugsweise aber etwas grössere Andruckplatte auf der Rückseite des Bodenteppichs so anzubringen, dass sie mit der Grundplatte der Halterung, beispielsweise über eine, den Bodenteppich seitlich umgreifende, Klammer oder über Stifte, welche durch den Bodenteppich hindurch gesteckt und mit der Halterung verschraubt würden, so verbunden werden könnte, dass der Bodenteppich zwischen Grund- und Andruckplatte festgeklemmt wäre.

Zur optimalen Anpassung an geneigte Befestigungsflächen könnte ferner zwischen Grundplatte und Befestigungssockel ein zusätzliches Gelenk vorgesehen werden.

Das Aufnahmegehäuse ist vorzugsweise rohrförmig ausgebildet und auf seiner offenen Stirnseite mit einer trichterartigen Erweiterung zum Einführen des Regenschirms versehen.

Zur Belüftung des Regenschirmes sollte die Mantelfläche und vorzugweise auch die Bodenwand des Aufnahmegehäuses mit Durchbrüchen versehen sein, welche möglichst gleichmässig über die gesamte Oberfläche verteilt sind.

Die Durchbrüche sind vorzugsweise als runde Löcher auszubilden. Dies ermöglicht ein bestmögliches Verhältnis zwischen der Stabilität des Rohres und der Belüftungsfläche.

Die runde Form der Lüftungsöffnungen verhindert ferner ein Verhängen bzw. eine Beschädigung des Regenschirms beim Einführen und Entnehmen.

Auf der Innenseite des Aufnahmegehäuses können Abstützungen vorgesehen werden, welche den Regenschirm zwecks besserer Belüftung von den Aussenwänden des Aufnahmegehäuses distanziert halten.

Die Aufbewahrungsvorrichtung ist vorzugsweise mit einer Auffangschale für das Tropfwasser eines nassen Regenschirmes ausgestattet.

Diese sollte auf der Unterseite des Aufnahmegehäuses angeordnet sein und sich in etwa über dessen Länge erstrecken.

Bei einer bevorzugten Ausführungsform ist die, als separates Bauteil konzipierte, Auffangschale so an der Aufbewahrungsvorrichtung anbring- bzw. einstellbar, dass sie jeweils unabhängig von der Einbau- bzw. Schwenklage des Aufnahmegehäuses lotrecht unter diesem ausgerichtet werden kann.

Die Auffangschale könnte bspw. als konzentrisch zum Aufnahmegehäuse ausgebildetes Rohrsegment von aussen auf das Aufnahmegehäuse aufsteckbar und mit diesem drehbar verbunden sein.

Dies setzt jedoch voraus, dass das Aufnahmgehäuse mit entsprechend angeordneten Wasserabläufen versehen ist, welche in jeder Einbaulage das Tropfwasser nach unten abfliessen lassen.

Es wäre natürlich auch möglich, das Aufnahmegehäuse auf einem Teilbereich des Umfangs seiner Mantelfläche ohne Durchbrüche auszubilden und so das Tropfwasser direkt im Aufnahmegehäuse aufzufangen.

Bei einer solchen Ausführungsform sollten jedoch im Bereich der geschlossenen Mantelfläche des Aufnahmegehäuses Abstützungen angeordnet sein, welche den Regenschirm oberhalb des gesammelten Tropfwassers abstützen.

Im weiteren sollte bei dieser Ausführungsform das Aufnahmegehäuse um seine Längsachse gegenüber dem Gelenk drehbar sein und so der Auffangbereich für das Tropfwasser, unabhängig von der jeweiligen Einbau- bzw. Schwenklage des Aufnahmegehäuses, nach unten ausgerichtet werden können.

Zur besseren Trocknung eines nassen Regenschirms könnte die Aufnahmevorrichtung schliesslich auch mit einer, vorzugsweise thermischen, Trocknungsvorrichtung ausgestattet sein.

Diese könnte vorzugsweise hinter der Bodenwand am Aufnahmegehäuse angeordnet werden, wobei dann die Bodenwand mit entsprechend grossen Luftdurchlässen zu versehen wäre.

Um ein seitliches Entweichen der durch die Bodenwand eingeblasenen Trocknungsluft zu vermeiden und eine bestmögliche Trocknung des Regenschirmes zu erzielen, sollten bei dieser Ausführungsform die Mantelflächen des Aufnahmgehäuses keine Oeffnungen aufweisen, sowie Abstützungen auf den Innenseiten der Mantelflächen angeordnet sein, sodass die Zirkulation der Trocknungsluft auf der gesamten Aussenseite des Regenschirmes gewährleistet ist.

Die Stromversorgung für eine Trockungsvorrichtung könnte über das Bordnetz, die Aktivierung vorzugsweise durch das Einführen des Regenschirmes in das Aufnahmgehäuse und die Inaktivierung über einen Zeitschalter erfolgen.

Weitere Merkmale und Vorteile der Erfindung ergeben sich aus den Unteransprüchen, bzw. der Beschreibung von Ausführungsbeispielen der Erfindung, welche nachstehend unter Bezugnahme auf die beigefügten Zeichnungen erläutert werden.

Es zeigen in einer skizzenhaften Darstellung:
- Fig. 1: eine erste Ausführungsform der Aufbewahrungsvorrichtung mit dem Aufnahmegehäuse in der abgeklappten und einer aufgeklappten Lage, in perspektivischer Darstellung.
- Fig. 2: einen vertikalen Längsschnitt der Aufbewahrungsvorrichtung gemäss Ausführungsform von Fig. 1.
- Fig. 3: einen horizontalen Längsschnitt der Aufbewahrungsvorrichtung gemäss Fig. 1 und 2.
- Fig. 4: eine erste Einbauvariante der Aufbewahrungsvorrichtung gemäss Ausführungsform von Fig. 1 bis 3 in perspektivischer Darstellung.
- Fig. 5: eine zweite Einbauvariante der Aufbewahrungsvorrichtung gemäss Ausführungsform von Fig. 1 bis 3 in perspektivischer Darstellung.
- Fig. 6: eine dritte Einbauvariante der Aufbewahrungsvorrichtung gemäss Ausführungsform von Fig. 1 bis 3 in perspektivischer Darstellung.
- Fig. 7: eine vierte Einbauvariante der Aufbewahrungsvorrichtung gemäss Ausführungsform von Fig. 1 bis 3 in perspektivischer Darstellung.
- Fig. 8: eine zweite Ausführungsform der Aufbewahrungsvorrichtung in einem vertikalen Längsschnitt.
- Fig. 9: die Aufbewahrungsvorrichtung gemäss Ausführungsform von Fig. 8 in einem horizontalen Längsschnitt.

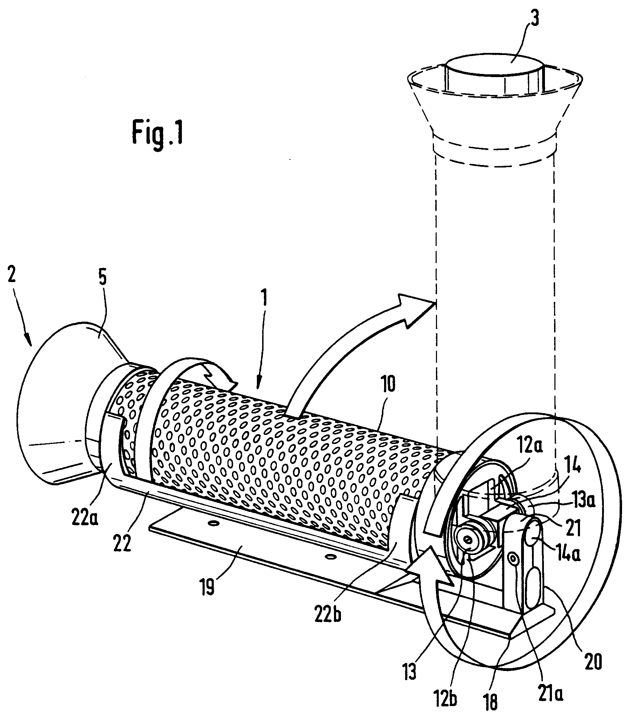

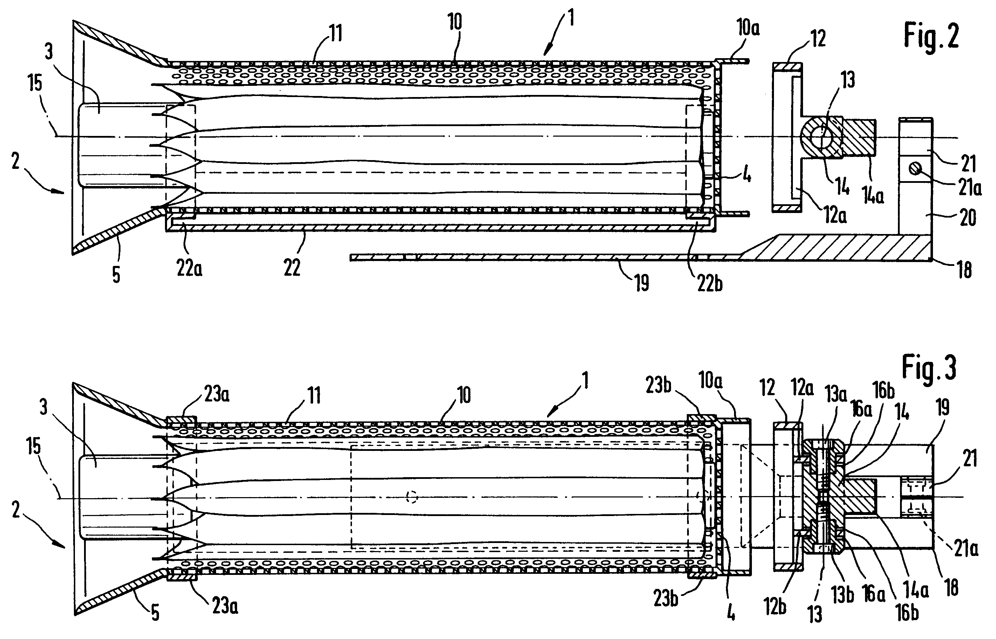

In den Figuren 1 bis 3 wird eine erste Ausführungsform der Aufbewahrungsvorrichtung dargestellt.

Das Aufnahmegehäuse 1 ist als Rohr mit rundem Querschnitt ausgebildet.

An einer Stirnseite weist das Aufnahmegehäuse 1 eine Oeffnung 2 zum Einführen und Entnehmen des Regenschirmes 3 auf, während es auf der anderen Stirnseite durch die Bodenwand 4 verschlossen ist.

Als Einführhilfe für den Regenschirm 3 ist das Aufnahmegehäuse 1 auf seiner offenen Stirnseite 2 mit einer trichterförmigen Erweiterung 5 versehen.

Zur Belüftung des Aufnahmegehäuses 1 sind auf seiner Mantelfläche 10 Durchbrüche 11 angeordnet, welche als runde Löcher ausgebildet sind.

Die Mantelfläche 10 ist über die Bodenwand 4 hinaus verlängert.

Die Verlängerung 10a dient zur Aufnahme und Befestigung des Schwenkkopfes 12, an dem über das Gelenk 13 der Lagerbock 14 angelenkt ist, an welchem der zylinderförmige Befestigungsbolzen 14a angeordnet ist, der mit der Längsachse 15 des abgeklappten Aufnahmegehäuses 1 fluchtet.

Der Schwenkkopf 12 und der Lagerbock 14 sind über die beiden Streben 12a, 12b und die Gelenkschrauben 13a, 13b miteinander verbunden, wobei zwischen den Streben 12a, 12b und den Gelenkschrauben 13a, 13b bzw. dem Lagerbock 14 Reibungsbremsen 16a, 16b eingefügt sind, welche das Aufnahmegehäuse 1 in jeder Schwenkstellung stufenlos fixieren.

Die Halterung 18 weist einen L-förmigen Querschnitt auf und umfasst die Grundplatte 19, welche parallel zur Längsachse 15 des abgeklappten Aufnahmegehäuses 1 verläuft, sowie den senkrecht auf dieser angeordneten Befestigungssockel 20.

Am Befestigungssockel 20 ist der Flansch 21 zur Aufnahme des Befestigungsbolzens 14a ausgebildet, wobei der Befestigungsbolzen 14a im Flansch 21 in jede gewünschte Drehlage verstellt und mittels der Feststellvorrichtung 21a fixiert werden kann.

Der Schwenkkopf 12, die Streben 12a, 12b, der Lagerbock 14, der Befestigungsbolzen 14a, der Befestigungssockel 20 und der Flansch 21 sind so ausgebildet, dass das Aufnahmegehäuse 1 gegenüber der Halterung 18 in jeder Drehlage (ausser natürlich gegen die Grundplatte 19) um ca. 90° aufgeklappt werden kann.

Die Auffangschale 22 ist als konzentrisches Rohrsegment zum Aufnahmegehäuse 1 ausgebildet und mittels der Klammern 23a, 23b von aussen auf dieses aufgesteckt und um dessen Längsachse 15 drehbar gelagert.

Dadurch kann die Auffangschale 22 rund um die Mantelfläche 10 in jede gewünschte Stellung gedreht und zu Montage- und Reinigungszwecken problemlos vom Aufnahmegehäuse 1 getrennt werden.

Die Auffangschale 22 erstreckt sich von der Bodenwand 4 bis zur trichterförmigen Erweiterung 5 und ist an ihren Endkanten mit den taschenförmigen Hohlräumen 22a, 22b versehen, in welchen das sich in der Auffangschale 22 gesammelte Tropfwasser beim Verschwenken des Aufnahmegehäuses 1 um das Gelenk 13 aufgefangen wird.

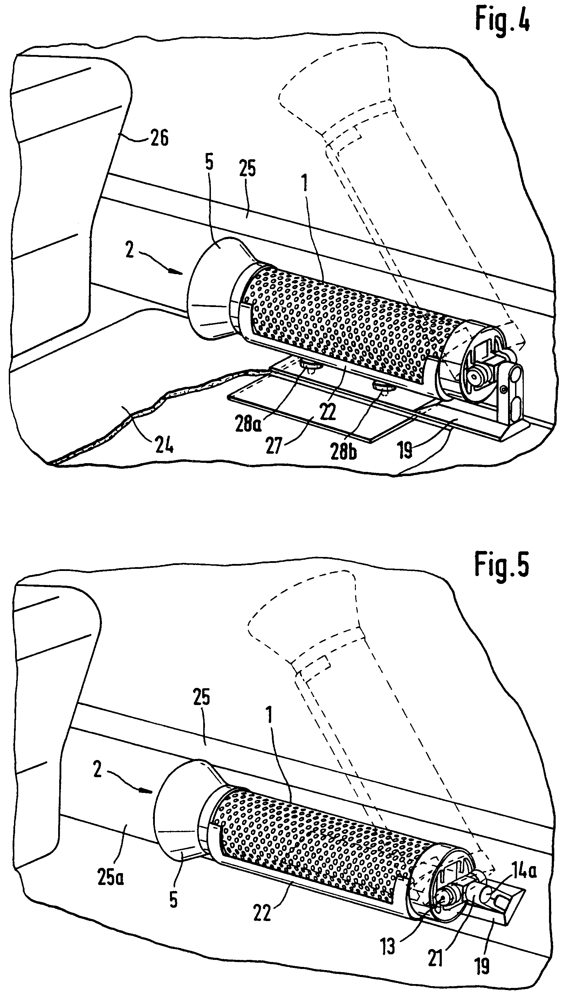

In den Figuren 4 bis 7 werden vier Beispiele von Einbauvarianten der Aufbewahrungsvorrichtung gemäss Ausführungsform von Fig. 1 bis 3 gezeigt.

In Figur 4 wird eine erste Einbauvariante mit einer Befestigung der Aufbewahrungsvorrichtung am Bodenteppich 24 des Kraftfahrzeuges (Kfz) gezeigt.

Die Aufbewahrungsvorrichtung ist neben dem Türschweller 25 und in etwa parallel zu diesem vor dem Fahrzeugsitz 26 im Kfz angebracht.

Gegenüber der Grundplatte 19 ist unter dem Bodenteppich 24 die Andruckplatte 27 angeordnet und über die Schrauben 28a, 28b, welche durch den Bodenteppich 24 hindurchgesteckt sind, mit der Grundplatte 19 verschraubt.

Der Bodenteppich 24 wird dadurch zwischen der Grundplatte 19 und der Andruckplatte 27 festgeklemmt und so versteift, dass das Aufnahmegehäuse 1 so weit hochgeklappt werden kann, dass ein problemloses Einführen und Entnehmen des Regenschirms am Fahrzeugsitz 26 vorbei möglich ist.

Zur Reinigung des Bodenteppichs 24 kann die Aufbewahrungsvorrichtung durch Lösen der Schrauben 28a, 28b problemlos entfernt werden.

Diese Befestigungsart kann grundsätzlich überall am Bodenteppich erfolgen.

In Figur 5 ist die Grundplatte 19 auf der schräg abfallenden Innenwand 25a des Türschwellers 25 festgeschraubt.

Damit das Aufklappen des Aufnahmegehäuses 1 in einer senkrechten Ebene erfolgen kann, muss der Befestigungsbolzen 14a zur Kompensation der Schrägstellung der Innenwand 25a im Flansch 21 soweit verdreht werden, bis die Gelenkachse 13 horizontal steht.

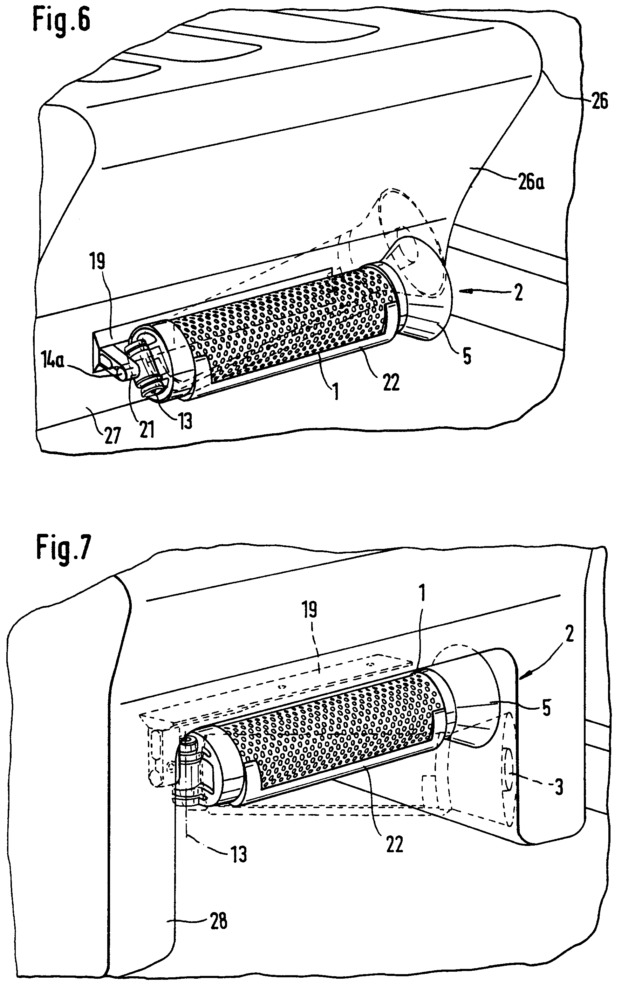

In Figur 6 ist die Grundplatte 19 an der senkrechten Sockelleiste 27a des Fahrzeugsitzes 26 angebracht.

Damit das Aufnahmegehäuse 1 an der nach vorne geneigten Stirnseite 26a des Fahrzeugsitzes 26 vorbei nach oben geschwenkt werden kann, muss der Befestigungsbolzen 14a im Flansch 21 so gedreht werden, dass die Gelenkachse 13 in etwa senkrecht zur Stirnseite 26a steht.

Zum Ausgleich dieser Schrägstellung muss die Auffangschale 22 in eine lotrechte Lage unter das Aufnahmegehäuse 1 nach vorne gedreht werden.

Figur 7 zeigt schliesslich eine Einbauvariante, bei der die Grundplatte 19 auf der Unterseite des Sitzes 28 aufgehängt ist.

Damit das Aufnahmegehäuse 1 zum Einführen und Entnehmen des Regenschirmes 3 nach vorne ausgeschwenkt werden kann, muss die Gelenkachse 13 gegenüber der Grundplatte 19 um ca. 90° in eine senkrechte Lage gedreht werden.

Zur Kompensation dieser Drehung des Aufnahmegehäuses 1 muss auch die Auffangschale 22 um 90° gedreht werden, sodass sie unterhalb des Aufnahmegehäuses 1 positioniert ist.

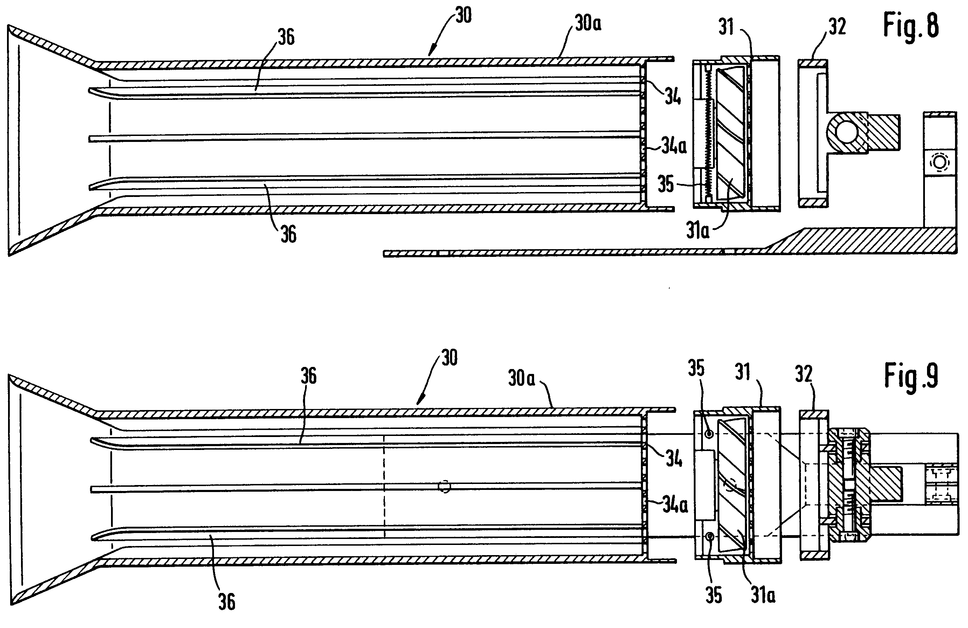

In den Figuren 8 und 9 wird eine zweite Ausführungsform der Aufbewahrungsvorrichtung dargestellt, die im Prinzip der in den Figuren 1 bis 3 gezeigten Ausführungsform entspricht, zusätzlich aber mit einer themrischen Trockungsvorrichtung für den Regenschirm ausgestattet ist.

Die Trocknungsvorrichtung 31 ist zwischen dem Aufnahmegehäuse 30 und dem Schwenkkopf 32 eingefügt.

Die Trocknungsvorrichtung enthält ein Gebläse 31a, welche die, mittels der Heizvorrichtung 35 erwärmte Luft durch den nach hinten offenen Schwenkkopf 32 ansaugt und durch die mit Luftdurchlässen 34a versehene Bodenwand 34 ins Aufnahmegehäuse 30 hineinbläst.

Damit die eingeblasene Trocknungsluft nicht seitlich entweicht und eine bestmögliche Trocknung des Regenschirmes erreicht werden kann, sind bei dieser Ausführungsform an der Mantelfläche 30a keine Durchbrüche vorgesehen und Abstützungen 36 angebracht, die den Regenschirm von der Mantelfläche 30a distanziert halten und so eine Zirkulation der Trocknungsluft auf der gesamten Aussenseite des Regenschirmes gewährleisten.

## Patentansprüche

1. Aufbewahrungsvorrichtung für einen Regenschirm und zum Einbau in Kraftfahrzeugen, mit einem köcherförmigen Aufnahmegehäuse (1,30), welches auf einer Stirnseite eine Öffnung (2) zum Einführen und Entnehmen des Regenschirms (3) und auf der anderen Stirnseite eine Bodenwand (4,34) aufweist, sowie einer Halterung (18) zum Anbringen der Aufbewahrungsvorrichtung im Kraftfahrzeug, wobei das Aufnahmegehäuse (1,30) und die Halterung (18) über ein, quer zur Längsachse (15) des Aufnahmegehäuses (1,30) schwenk- und feststellbares, hinter der Bodenwand (4,34) angeordnetes Gelenk (13) in der Weise miteinander verbunden sind, daß sich die Längsachse (15) des Aufnahmegehäuses (1,30) und die Schwenkachse des Gelenks (13) schneiden, und daß hinter dem Gelenk (13) ein im wesentlichen parallel zur Längsachse (15) des abgeklappten Aufnahmegehäuses (1,30) verlaufender zylinderförmiger Befestigungsbolzen (14a) angeordnet ist, **dadurch gekennzeichnet**, daß die Halterung (18) eine Grundplatte (19) sowie einen im wesentlichen senkrecht dazu angeordneten Flansch (21) mit Befestigungssockel (20) zur Aufnahme des Befestigungsbolzens (14a) umfaßt, der drehbar im Flansch (21) gelagert ist, und daß am Flansch (21) eine Feststellvorrichtung (21a) angeordnet ist, mittels welcher der Befestigungsbolzen (14a) in jeder Drehlage fixierbar ist.

2. Aufbewahrungsvorrichtung nach Anspruch 1, **dadurch gekennzeichnet**, daß der Befestigungsbolzen (14a) mit der Längsachse (15) des abgeklappten Aufnahmegehäuses (1,30) fluchtet.

3. Aufbewahrungsvorrichtung nach Anspruch 1, **dadurch gekennzeichnet**, daß das Gelenk (13) mit einer Reibungsbremse (16a,16b) versehen ist.

4. Aufbewahrungsvorrichtung nach Anspruch 1, **dadurch gekennzeichnet**, daß die Grundplatte (19) im wesentlichen parallel zur Längsachse (15) des Befestigungsbolzens (14a) verläuft.

5. Aufbewahrungsvorrichtung nach Anspruch 1, **dadurch gekennzeichnet**, daß an der offenen Stirnseite (2) des Aufnahmegehäuses (1,30) eine trichterartige Erweiterung (5) vorgesehen ist.

6. Aufbewahrungsvorrichtung nach Anspruch 1, **dadurch gekennzeichnet**, daß an der Mantelfläche (10,30a) bzw. der Bodenwand (4,34) des Aufnahmegehäuses (1,30) Durchbrüche (11,34a) angeordnet sind.

7. Aufbewahrungsvorrichtung nach Anspruch 6, **dadurch gekennzeichnet**, daß die Durchbrüche (11,34a) als runde Löcher ausgebildet sind.

8. Aufbewahrungsvorrichtung nach Anspruch 1, **dadurch gekennzeichnet**, daß im Aufnahmegehäuse (1,30) Abstützungen (36) vorgesehen sind, die den Regenschirm (3) von der Mantelfläche (10,30a) distanzieren.

9. Aufbewahrungsvorrichtung nach Anspruch 6, **dadurch gekennzeichnet**, daß auf der Außenseite des Aufnahmegehäuses (1,30) eine Auffangschale (22) für das Tropfwasser des Regenschirms (3) angeordnet ist.

10. Aufbewahrungsvorrichtung nach Anspruch 9, **dadurch gekennzeichnet**, daß das Aufnahmegehäuse (1,30) und die Auffangschale (22) relativ zueinander beweglich sind.

11. Aufbewahrungsvorrichtung nach Anspruch 10, **dadurch gekennzeichnet**, daß die Auffangschale (22) als konzentrisch zum Aufnahmegehäuse (1,30) ausgebildetes Rohrsegment von außen auf das Aufnahmegehäuse (1,30) aufsteckbar und mit diesem drehbar verbunden ist.

12. Aufbewahrungsvorrichtung nach Anspruch 6, **dadurch gekennzeichnet**, daß das Aufnahmegehäuse (1,30) auf einem Teilbereich seines Umfangs eine geschlossene Mantelfläche (10,30a) aufweist, welche gegenüber dem Gelenk (13) um die Längsachse (15) des Aufnahmegehäuses (1,30) verdrehbar ist.

13. Aufbewahrungsvorrichtung nach Anspruch 1, **dadurch gekennzeichnet**, daß die Halterung (18) eine Grundplatte (19) sowie eine parallel dazu verlaufende Andruckplatte (27) umfaßt, zwischen welche ein Bodenteppich (24) eingefügt werden kann und wobei Mittel (28a,28b) vorgesehen sind, welche die Grundplatte (19) und die Andruckpaltte (27) gegeneinander pressen.

14. Aufbewahrungsvorrichtung nach Anspruch 13, **dadurch gekennzeichnet**, daß die Mittel (28a,28b) Stifte umfassen, welche durch den Bodenteppich (24) hindurch gesteckt und mit der Grundplatte (19) bzw. der Andruckplatte (27) kraftschlüssig verbunden sind.

15. Aufbewahrungsvorrichtung nach Anspruch 14, **dadurch gekennzeichnet**, daß die Mittel (28a,28b) als Schrauben ausgebildet sind.

16. Aufbewahrungsvorrichtung nach Anspruch 1, **dadurch gekennzeichnet**, daß das Aufnahmegehäuse (1,30) mit einem Gebläse (31a) belüftet wird.

17. Aufbewahrungsvorrichtung nach Anspruch 16, **dadurch gekennzeichnet**, daß das Gebläse (31a) hinter der Bodenwand (4,34) angeordnet ist.

18. Aufbewahrungsvorrichtung nach Anspruch 16, **dadurch gekennzeichnet**, daß das Gebläse (31a) zwischen der Bodenwand (4,34) und dem Gelenk (13) angeordnet ist.

19. Aufbewahrungsvorrichtung nach Anspruch 16, **dadurch gekennzeichnet**, daß die Gebläseluft mittels einer Heizvorrichtung (35) erwärmt wird.

20. Aufbewahrungsvorrichtung nach Anspruch 16, **dadurch gekennzeichnet**, daß das Gebläse (31a) beim Einführen des Regenschirms (3) in das Aufnahmegehäuse (1,30) aktiviert und über einen Zeitschalter inaktiviert wird.

## Claims

1. Storage device for an umbrella and for installation in motor vehicles, having a quiver-shaped receiving housing (1, 30) that has an opening (2) at one end face for inserting and removing the umbrella (3) and a base wall (4, 34) at the other end face, and a mounting (18) for attaching the storage device in the motor vehicle, the receiving housing (1, 30) and the mounting (18) being so connected to one another by way of a joint (13) that is arranged behind the base wall (4, 34) and is swivellable and lockable transversely to the longitudinal axis (15) of the receiving housing (1, 30) that the longitudinal axis (15) of the receiving housing (1, 30) and the swivel axis of the joint (13) intersect and a cylindrical fixing bolt (14a) running substantially parallel to the longitudinal axis (15) of the stowed-away receiving housing (1, 30) is arranged behind the joint (13), characterised in that the mounting (18) comprises a base plate (19) and a flange (21), arranged substantially perpendicular thereto, having a mounting pillar (20) for receiving the fixing bolt (14a) which is mounted rotatably in the flange (21), and a locking device (21a) is arranged on the flange (21), by means of which locking device the fixing bolt (14a) can be fixed in any position of rotation.

2. Storage device according to claim 1, characterised in that the fixing bolt (14a) is aligned with the longitudinal axis (15) of the stowed-away receiving housing (1, 30).

3. Storage device according to claim 1, characterised in that the joint (13) is provided with a friction brake (16a, 16b).

4. Storage device according to claim 1, characterised in that the base plate (19) runs substantially parallel to the longitudinal axis (15) of the fixing bolt (14a).

5. Storage device according to claim 1, characterised in that a funnel-like extension (5) is provided at the open end face (2) of the receiving housing (1, 30).

6. Storage device according to claim 1, characterised in that openings (11, 34a) are arranged on the circumferential surface (10, 30a) or on the base wall (4, 34) of the receiving housing (1, 30).

7. Storage device according to claim 6, characterised in that the openings (11, 34a) are in the form of round holes.

8. Storage device according to claim 1, characterised in that supports (36) are provided in the receiving housing (1, 30), which space the umbrella (3) from the circumferential surface (10, 30a).

9. Storage device according to claim 6, characterised in that a collecting tray (22) for the drip water from the umbrella (3) is arranged on the outside of the receiving housing (1, 30).

10. Storage device according to claim 9, characterised in that the receiving housing (1, 30) and the collecting tray (22) are movable in relation to one another.

11. Storage device according to claim 10, characterised in that the collecting tray (22) is arranged in the form of a segment of a tube concentrically with the receiving housing (1, 30) to be attachable to the receiving housing (1, 30) from the outside and is connected to it to be rotatable.

12. Storage device according to claim 6, characterised in that the receiving housing (1, 30) has on a portion of its circumference a closed circumferential surface (10, 30a) that is arranged to be rotatable in relation to the joint (13) about the longitudinal axis (15) of the receiving housing (1, 30).

13. Storage device according to claim 1, characterised in that the mounting (18) comprises a base plate (19) and a mounting plate (27) running parallel thereto, between which a floor carpet (24) can be inserted, means (28a, 28b) being provided that press the base plate (19) and the mounting plate (27) against one another.

14. Storage device according to claim 13, characterised in that the means (28a, 28b) comprise pins, which are pushed through the floor carpet (24) and are joined in a non-interlocking manner with the base plate (19) and the mounting plate (27).

15. Storage device according to claim 14, characterised in that the means (28a, 28b) are in the form of screws.

16. Storage device according to claim 1, characterised in that the receiving housing (1, 30) is ventilated by a fan (31a).

17. Storage device according to claim 16, characterised in that the fan (31a) is arranged behind the base wall (4, 34).

18. Storage device according to claim 16, characterised in that the fan (31a) is arranged between the base wall (4, 34) and the joint (13).

19. Storage device according to claim 16, characterised in that the fanned air is heated by means of a heating device (35).

20. Storage device according to claim 16, characterised in that the fan (31a) is activated on insertion of the umbrella (3) into the receiving housing (1, 30) and is deactivated by way of a time switch.

## Revendications

1. Dispositif porte-parapluie prévu pour installation dans des véhicules à moteur, comportant un capot de réception (1, 30) en forme de carquois, qui présente sur une face frontale une ouverture (2) pour introduire et reprendre le parapluie (3) et sur l'autre face frontale une paroi de fond (4, 34), ainsi qu'un support (18) pour placer le dispositif porte-parapluie dans le véhicule, le capot de réception (1, 30) et le support (18) étant reliés l'un à l'autre, par l'intermédiaire d'une articulation (13) disposée derrière la paroi de fond (4, 34) et pouvant pivoter et se bloquer transversalement par rapport à l'axe longitudinal (15) du capot de réception (1, 30), de façon que l'axe longitudinal (15) du capot de réception (1, 30) et l'axe de pivotement de l'articulation (13) s'intersectent et que derrière l'articulation (13) soit disposé un tourillon de fixation de forme cylindrique (14a) orienté sensiblement parallèlement à l'axe longitudinal (15) du capot de réception (1, 30) rabattu, caractérisé par le fait que le support (18) comporte une plaque de base (9) ainsi qu'une collerette (21), avec embase de fixation (20), disposée sensiblement perpendiculairement à la plaque de base, pour recevoir le tourillon de fixation (14a) qui est porté dans la collerette (21) avec liberté de rotation, et que sur la collerette (21) est disposé un dispositif de blocage (21a) au moyen duquel le tourillon de fixation (14a) peut se fixer dans toute position de rotation.

2. Dispositif porte-parapluie conforme à la revendication 1, caractérisé par le lait que le tourillon de fixation (14a) est aligné avec l'axe longitudinal (15) du capot de réception (1, 30), rabattu.

3. Dispositif porte-parapluie conforme à la revendication 1, caractérisé par le fait que l'articulation (13) est munie d'un frein à friction (16a, 16b).

4. Dispositif porte-parapluie conforme à la revendication 1, caractérisé par le fait que la plaque de base (19) est orientée sensiblement parallèlement à l'axe longitudinal (15) du tourillon de fixation (14a).

5. Dispositif porte-parapluie conforme à la revendication 1, caractérisé par le fait qu'un élargissement en forme d'entonnoir (5) est prévu sur la face frontale ouverte (2) du capot de réception (1, 30).

6. Dispositif porte-parapluie conforme à la revendication 1, caractérisé par le fait que les découpes (11, 34a) sont disposées sur la surface enveloppe (10, 30a) ou sur la paroi de fond (4, 34) du capot de réception (1, 30).

7. Dispositif porte-parapluie conforme à la revendication 6, caractérisé par le fait que les découpes (11, 34a) sont conçues sous forme de trous ronds.

8. Dispositif porte-parapluie conforme à la revendication 1, caractérisé par le fait que dans le capot de réception (1, 30) sont prévus des appuis (36) qui tiennent le parapluie (3) à distance de la surface enveloppe (10, 30a).

9. Dispositif porte-parapluie conforme à la revendication 6, caractérisé par le fait que sur la face extérieure du capot de réception (1, 30) est disposée une cuvette de collecte (22) pour l'eau qui s'égoutte du parapluie (3).

10. Dispositif porte-parapluie conforme à la revendication 9, caractérisé par le fait que le capot de réception (1, 30) et la cuvette de collecte (22) sont mobiles l'un par rapport à l'autre.

11. Dispositif porte-parapluie conforme à la revendication 10, caractérisé par le fait que la cuvette de collecte (22), sous forme d'un segment tubulaire prévu concentrique au capot de réception (1, 30), lui est reliée en s'enfichant de l'extérieur sur le capot de réception (1, 30) et avec liberté de rotation par rapport à lui.

12. Dispositif porte-parapluie conforme à la revendication 6, caractérisé par le fait que le capot de réception (1, 30) présente, sur une zone partielle de sa périphérie, une surface enveloppe close (10, 30a) que l'on peut faire tourner autour de l'axe longitudinal (15) du capot de réception (1, 30) par l'intermédiaire de l'articulation (13).

13. Dispositif porte-parapluie conforme à la revendication 1, caractérisé par le fait que le support (18) comporte une plaque de base (19) ainsi qu'une plaque de pression (27), orientée parallèlement à la plaque de base (19), entre lesquelles on peut insérer un tapis de plancher (24) et dans lequel sont prévus des moyens (28a, 28b) qui pressent l'une contre l'autre la plaque de base (19) et la plaque de pression (27).

14. Dispositif porte-parapluie conforme à la revendication 13, caractérisé par le fait que les moyens (28a, 28b) comportent des tiges qui passent à travers le tapis de plancher (24) et sont reliées par serrage, à la plaque de base (19) ou à la plaque de pression (27).

15. Dispositif porte-parapluie conforme à la revendication 14, caractérisé par le fait que les moyens (28a, 28b) sont conçus sous forme de vis.

16. Dispositif porte-parapluie conforme à la revendication 1, caractérisé par le fait que le capot de réception (1, 30) est ventilé par un ventilateur (31a).

17. Dispositif porte-parapluie conforme à la revendication 16, caractérisé par le fait que le ventilateur (31a) est disposé derrière la paroi de fond (4, 34).

18. Dispositif porte-parapluie conforme à la revendication 16, caractérisé par le fait que le ventilateur (31a) est disposé entre la paroi de fond (4, 34) et l'articulation (13).

19. Dispositif porte-parapluie conforme à la revendication 16, caractérisé par le fait que l'air du ventilateur est chauffé au moyen d'un dispositif de chauffage (35).

20. Dispositif porte-parapluie conforme à la revendication 16, caractérisé par le fait que le ventilateur (31a) est activé lorsque l'on introduit le parapluie (3) par le capot de réception (1, 30) et qu'il est inactivé au moyen d'un temporisateur.
